# EUROPÄISCHE PATENTSCHRIFT

(11) **EP 1 020 482 B1**
(45) Veröffentlichungstag und Bekanntmachung des Hinweises auf die Patenterteilung: **18.08.2004**
(21) Anmeldenummer: 00100394.6
(22) Anmeldetag: 08.01.2000
(51) Int. Cl.: C08G 18/08, C08G 18/12, C09D 175/06

(54) **Bindemittel für "Soft-Feel"-Lacke**
Binder for soft-feel laquers
Liant pour vernis souple au toucher

(30) Priorität: 18.01.1999 AT 5499
(43) Veröffentlichungstag der Anmeldung: 19.07.2000
(73) Patentinhaber: Surface Specialties Austria GmbH, 8402 Werndorf (AT)
(72) Erfinder: Schafheutle, Markus, Dr., 8044 Graz (AT); Gerlitz, Martin, Dr., 8055 Graz (AT); Arzt, Anton, 8430 Tillmitsch (AT); Burkl, Julius, 8053 Graz (AT); Wango, Jörg, 8142 Wundschuh 72 (AT); Glettler, Martina, 8041 Graz (AT)
(74) Vertreter: Deckers, Hellmuth, Dr.

(56) Entgegenhaltungen:
- EP-A- 0 669 352
- WO-A-97/23516
- US-A- 4 758 615
- US-A- 5 567 527

## Beschreibung

Bei der Lackierung harter Substrate, beispielsweise von Kunststoffen, wird es häufig gewünscht, durch die Beschichtung einen weichen "Griff" zu erreichen, wobei die Oberfläche sich zwar weich anfühlt, die mechanische und chemische Beständigkeit der so hergestellten Beschichtungen jedoch im Vergleich zu den üblichen Beschichtungen nicht verschlechtert ist.

Bindemittel für diese sogenannten "Soft-Feel"-Lacke sind vorzugsweise solche, die Segmente von Polymeren mit niedriger Glas-Übergangs-Temperatur aufweisen; die Vernetzungsdichte muß so hoch sein, daß die mechanischen und chemischen Beständigkeits-Eigenschaften sich möglichst wenig oder gar nicht verschlechtern; andererseits muß sie niedrig genug sein, um auch makroskopisch den Effekt der niedrigen Glas-Übergangs-Temperatur zur Geltung kommen zu lassen.

Es sind Zwei-Komponenten-Bindemittel für "Soft-Feel"-Lacke auf Basis von Hydroxylgruppen-haltigen Polyester-Urethanen bekannt, die bevorzugt mit Isocyanaten, aber auch z. B. mit Säureanhydriden oder Aminoplastharzen zu härten sind.

Bisher ist es noch nicht gelungen, brauchbare Ein-Komponenten-Bindemittel für "Soft-Feel"-Lacke zur Verfügung zu stellen. Die Vernetzung mit Aminoplastharzen kann zwar bei erhöhter Temperatur im Sinne eines Ein-Komponenten-Systems ablaufen, jedoch wird die weiche Oberfläche des "Soft-Feel"-Lackes durch die hohen erforderlichen Temperaturen ungünstig beeinflußt.

Die bekannten bei Raumtemperatur härtenden Systemen auf Basis von Polyisocyanaten weisen die bei Isocyanaten üblichen Probleme auf: die begrenzte Topfzeit und die arbeitshygienische Bedenklichkeit. Ein weiterer wesentlicher Nachteil von Isocyanathärtern in Verbindung mit "Soft-Feel"-Lacken ist die dabei beobachtete "Nachhärtung". Die zur Vernetzung eingesetzten mehrfunktionellen Isocyanate müssen wegen der Gegenwart von Wasser (das selbst mit den Isocyanaten reagieren kann) im Überschuß eingesetzt werden. Sie reagieren mit Wasser unter Decarboxylierung und Bildung der entsprechenden Amine, die wiederum mit noch unumgesetzten Isocyanaten Harnstoffe bilden. Diese Reaktion läuft während der Trocknung des Lackes ab und beeinträchtigt den unmittelbar nach dem Auftrag noch weichen "Griff" der Lackschicht. Es bestand daher das Bedürfnis, ein Bindemittel für "Soft-Feel"-Lacke zu entwickeln, das diesen weichen "Griff" dauerhaft behält. Eine weitere Aufgabe war, ein Einkomponenten-Bindemittel zur Verfügung zu stellen, das bei moderater Temperatur härtet und dennoch möglichst geringe Beschränkungen bei der Topfzeit ergibt.

Aus der EP 0 669 352 A1 ist ein als "Soft-Feel"-Lack geeignetes Beschichtungsmittel bekannt, das eine Kombination aus einer wäßrigen Dispersion von Polyester-Polyurethanen mit einem Massenanteil an Hydroxylgruppen von 0,25 % bis 6,5 % und Vernetzer ausgewählt aus Aminoplastharzen, gegebenenfalls hydrophil modifizierten blockierten Polyisocyanaten und gegebenenfalls hydrophil modifizierten Polyisocyanaten mit freien Isocyanatgruppen enthält. Aus der US-Patentschrift 5,567,527 ist eine Kombination von Copolymeren des Vinyläthylencarbonats mit amin-funktionellen Vernetzern bekannt.

Überraschenderweise hat sich herausgestellt, daß Polymere mit überwiegend aliphatischem Charakter, die terminale oder laterale cyclische Carbonatgruppen enthalten, die erforderliche niedrige Glasübergangstemperatur aufweisen und in wäßriger, aminhaltiger Dispersion zu Bindemitteln verarbeitbar sind, die nach dem Trocknen in kurzer Zeit und bei niedrigen Temperaturen vernetzen und zu Beschichtungen fuhren, die den geforderten weichen Griff ("Soft-Feel") aufweisen, ohne daß sich der weiche Griff rasch verliert. Diese Bindemittel lassen sich zu Zwei-Komponenten-Lacken und zu Ein-Komponenten-Lacken formulieren.

Gegenstand der Erfindung sind daher wäßrige Bindemittel für "Soft-Feel"-Lacke, enthaltend vorwiegend aliphatische, wasserlösliche oder wasserdispergierbare Polymere **A** mit terminalen oder lateralen cyclischen Carbonatgruppen, und ein Amin **B** mit mindestens zwei primären Aminogruppen, wobei das Verhältnis der Anzahl der primären Aminogruppen in der Komponente **B** zur Anzahl der cyclischen Carbonatgruppen in der Komponente **A** 7:3 bis 3:7, bevorzugt 6:4 bis 4:6 beträgt.

Unter "vorwiegend aliphatisch" werden solche Polymere verstanden, bei denen der Massenanteil an aliphatischen Bausteinen in der Summe der Massen von aromatischen und aliphatischen Bausteinen mindestens 60 %, vorzugsweise mindestens 70 %, und besonders bevorzugt mindestens 75 % beträgt.

Unter terminalen cyclischen Carbonatgruppen werden solche verstanden, die bei linearen oder verzweigten Molekülen jeweils am Kettenende stehen. Als laterale cyclische Carbonatgruppen werden solche bezeichnet, die nicht am Ende einer Kette oder eines Kettenzweigs stehen. Bevorzugt enthalten die Polymeren **A** im Durchschnitt mindestens 1,5, besonders bevorzugt mindestens 2 solche cyclischen Carbonatgruppen pro Molekül.

Als Bindemittelkomponente **A** eignen sich alle bekannten Klassen von aliphatischen oder vorwiegend aliphatischen Polymeren, die in Wasser löslich oder dispergierbar sind und entweder bereits durch ihre Synthese oder durch eine Umsetzung mit einer Verbindung, die eine cyclische Carbonatgruppe und eine mit reaktiven Endgruppen des Polymeren rasch reagierende Gruppe aufweist, cyclische Carbonatgruppen als Endgruppen enthalten. Beispiele für die letztere Klasse von Polymeren sind Polyacrylat-Polyole **A11**, Polyester-Polyole **A12**, Polyäther-Polyole **A13**, Polyurethan-Polyole **A14** und Polyolefinpolyole **A15** als Hydroxylgruppen-haltige Polymere **A1**, und Polyäther-Amine **A21** und Polyiminoalkylen-Amine **A22**, Polyamidoamine **A23** und Polyharnstoffe **A24** als Aminogruppen-haltige Polymere **A2**. Besonders bevorzugt sind dabei Polyacrylat-Polyole **A11**, Polyester-Polyole **A12**, Polyurethan-Polyole **A14** und Polyolefinpolyole **A15** sowie Polyamidoamine **A23** und Polyharnstoffe **A24**. Ebenfalls geeignet, aber weniger bevorzugt sind Polymere, die Mercaptogruppen als reaktive Gruppen enthalten. Dabei beträgt die spezifische Stoffmenge an Hydroxyloder Amino-Gruppen in den betreffenden Polymeren **A1** bzw. **A2** jeweils vorzugsweise ca. 0,01 bis 2 mmol/g, und die Polymeren weisen vorzugsweise im Durchschnitt pro Molekül jeweils mindestens 1,5, bevorzugt 1,8 bis 2,5, und besonders bevorzugt 1,9 bis 2,2 funktionelle Gruppen auf. Die Umwandlung dieser Hydroxyloder Amino-Endgruppen der Polymeren **A1** und **A2** in cyclische Carbonatgruppen kann beispielsweise und bevorzugt durch Umsetzung mit einem mindestens zweiwertigen Isocyanat **A3** erfolgen, wodurch die Polymeren mit IsocyanatEndgruppen versehen werden, die über eine Urethan- oder Harnstoff-Gruppe mit dem Ausgangspolymeren verbunden sind. Die Menge der Isocyanate **A3** ist dabei bevorzugt so zu wählen, daß im Mittel mindestens 1,5 Isocyanatgruppen pro Molekül dieses Zwischenproduktes enthalten sind. Diese isocyanatfunktionellen Polymeren wiederum lassen sich in einem nachfolgenden Schritt mit einer Verbindung **A4** mit mindestens einer gegenüber Isocyanat reaktiven Gruppe und einer cyclischen Carbonatgruppe, besonders bevorzugt Glycerincarbonat (4-Hydroxymethyl-1,3-dioxolan-2-on) zu dem gewünschten Polymeren **A** mit cyclischen Carbonat-Endgruppen umsetzen.

Beispiel von Polymeren **A5**, die bereits von den Edukten her die erforderlichen cyclischen Carbonatgruppen aufweisen, sind Umsetzungsprodukte von Bausteinen mit jeweils zwei bevorzugt endständigen cyclischen Carbonatgruppen **A51** (die beispielsweise aus Diepoxiden durch Reaktion mit Kohlendioxid unter geeigneter Katalyse herstellbar sind) und Diaminen **A52**, wobei die Diamine im Unterschuß einzusetzen sind.

Die Glas-Übergangs-Temperatur dieser für die Erfindung geeigneten Polymeren **A** liegt bei -70 bis -30, bevorzugt -60 bis -40 °C. Die Polymeren **A** weisen bevorzugt eine Säurezahl von 5 bis 200 mg/g, insbesondere von 20 bis 150 mg/g auf. Die Säuregruppen werden bevorzugt zumindest teilweise (mindestens 10 %, bevorzugt mindestens 25 %) neutralisiert. Der spezifische Gehalt an cyclischen Carbonatgruppen beträgt bevorzugt 0,01 bis 2 mmol/g, besonders bevorzugt 0,2 bis 1,5 mmol/g.

Die Polyacrylat-Polyole **A11** lassen sich auf bekannte Weise herstellen durch radikalisch initiierte Polymerisation von Mischungen von olefinisch ungesättigten Monomeren, wobei die Mischung einen Massenanteil von mindestens 5 %, bevorzugt mindestens 10 %, an Hydroxylgruppen-haltigen olefinisch ungesättigten Monomeren **A111** und einen Massenanteil von mindestens 1 %, bevorzugt mindestens 2 % an olefinisch ungesättigten Carbonsäuren **A112** enthalten. Eine andere Art der für die vorliegende Erfindung geeigneten Polyacrylat-Polyole sind zugänglich durch Polymerisation einer Mischung von olefinisch ungesättigten Monomeren, die keine Monomeren gemäß **A111**, jedoch einen Massenanteil von mindestens 2, bevorzugt mindestens 5 %, und besonders bevorzugt mindestens 8 % an olefinisch ungesättigten Carbonsäuren **A112** enthalten, die vor, während oder nach der Polymerisation mit Epoxidverbindungen zu Hydroxylgruppen-haltigen Verbindungen oder Polymeren umgesetzt werden. Als weitere Monomere **A113** können Alkylester von olefinisch ungesättigten Carbonsäuren oder Dicarbonsäuren verwendet werden, wobei die Alkylgruppen ausgewählt sind von linearen, verzweigten oder cyclischen aliphatischen Resten mit 4 bis 18 Kohlenstoffatomen, und die Säuren äusgewählt sind aus den Monocarbonsäuren Acryl- und Methacrylsäure sowie Croton- und Isocrotonsäure und Vinylessigsäure, sowie aus Malein- und Fumarsäure und Itacon-, Citracon- und Mesaconsäure. Es können auch Halbester dieser ungesättigten Dicarbonsäuren als Monomere gemäß **A112** eingesetzt werden. Weitere geeignete Comonomere **A113** sind Vinylaromaten wie Styrol, Vinyltoluol und Substitutionsprodukte und Homologe des Styrol, Vinylester von gesättigten aliphatischen Monocarbonsäuren wie Vinylacetat oder Vinylpropionat, Vinylhalogenide und Vinylidenhalogenide, Vinyläther und Vinylketone.

Die Polyester-Polyole **A12** lassen sich auf bekannte Weise darstellen durch Kondensation von vorzugsweise aliphatischen linearen, verzweigten oder cyclischen Polyolen **A121** und vorzugsweise aliphatischen linearen, verzweigten oder cyclischen Polycarbonsäuren **A122**.

Bevorzugt sind als Polyole **A121** aliphatische Dihydroxyverbindungen. Es ist auch möglich, einen Massenanteil von bis zu 20 % an drei- oder höherwertigen Polyolen (mit drei oder mehr Hydroxylgruppen pro Molekül, wie z. B. Trimethyloläthan und - propan, Pentaerythrit und Sorbit) in dieser Mischung einzusetzen. Bevorzugt beträgt dieser Massenanteil bis zu 10 %, besonders bevorzugt bis zu 5 %. Geeignete aliphatische Polyole **A121** sind insbesondere die linearen und verzweigten Dihydroxyverbindungen mit 2 bis 8 Kohlenstoffatomen wie Glykol, 1,2- und 1,3-Propandiol, 1,4-Butandiol, 1,6-Hexandiol, Neopentylglykol, Diäthylenglykol und Triäthylenglykol. Der Massenanteil an verzweigten Dihydroxyverbindungen soll dabei 5 % nicht übersteigen.

Als Verbindungen **A122** werden bevorzugt aliphatische lineare, verzweigte oder cyclische Carbonsäuren, besonders bevorzugt Dicarbonsäuren, eingesetzt. Geeignet sind beispielsweise lineare aliphatische Dicarbonsäuren mit 2 bis 40 Kohlenstoffatomen, wie Bernsteinsäure, Glutarsäure, Adipinsäure, Pimelinsäure und Korksäure, Azelain- und Sebacinsäure, Cyclohexandicarbonsäuren sowie die dimeren Fettsäuren, die aus natürlichen ungesättigten Fettsäuren oder deren Gemischen zugänglich sind. Aromatische Di- und Polycarbonsäuren können in geringem Anteil (Massenanteil in der Säurekomponente bis zu 40 %) zugesetzt werden. Beispiele hierfür sind Phthalsäure, Iso- und Terephthalsäure, Trimellithsäure, Trimesinsäure sowie Benzophenontetracarbonsäure.

Anstelle oder zusätzlich zu den Verbindungen **A121** und **A122** lassen sich auch Hydroxysäuren **A123**, bevorzugt Hydroxycarbonsäuren mit jeweils mindestens einer Hydroxyl- und einer Säure-Gruppe oder deren esterbildenden Derivate einsetzen. Besonders bevorzugt sind dabei Monohydroxymonocarbonsäuren. Geeignete Verbindungen dieser Klasse **A123** sind γ-Hydroxybuttersäure, δ-Hydroxyvaleriansäure, ε-Hydroxycapronsäure, Milchsäure sowie Oligo- und Polyester aus den genannten Säuren, wobei auch Gemische dieser Säuren in den Polyestern vorkommen können. Besonders bevorzugt ist das technisch verfügbare Poly- e-caprolacton.

Die Synthese der Polyesterpolyole **A12** erfolgt bevorzugt in zwei Stufen, wobei in der ersten Stufe lediglich difunktionelle Polyole **A121** mit zweibasigen aliphatischen linearen, verzweigten oder cyclischen Carbonsäuren **A122** zu einem linearen Polyester mit einer Hydroxylzahl von 20 bis 100, bevorzugt 30 bis 70, und besonders bevorzugt ca. 40 bis ca. 60 mg/g kondensiert werden. In einer zweiten Stufe wird mit weiteren Polyolen **A121** weiterkondensiert, wobei in dieser Stufe auch höherfunktionelle Polyole eingesetzt werden können. Am Ende dieser zweiten Stufe beträgt die Hydroxylzahl des Polyesters 50 bis 200 mg/g, bevorzugt 60 bis 160, besonders bevorzugt 70 bis 130 mg/g. Der Polyester der zweiten Stufe wird anschließend in der dritten Stufe mit einer Verbindung **A123** mit mindestens zwei Hydroxylgruppen und mindestens einer Säuregruppe sowie gegebenenfalls mit weiterem Polyol **A121** umgesetzt zu dem Addukt **A1**.

Als Verbindungen **A123** werden bevorzugt aliphatische Dihydroxycarbonsäuren wie Dimethylolpropionsäure und Weinsäure eingesetzt. Es lassen sich auch Säuren mit mindestens zwei Aminogruppen oder mindestens einer Amino- und einer Hydroxylgruppe anwenden, wie z. B. 2,4-Diaminobuttersäure.

Die erfindungsgemäß geeigneten Polyolefin-Polyole **A15** sind zugänglich durch Polymerisation von einfach oder mehrfach ungesättigten aliphatischen linearen, verzweigten oder cyclischen Verbindungen und Funktionalisierung der Endgruppen. Besonders bevorzugt werden Polymerisate von zweifach ungesättigten linearen oder verzweigten Olefinen, wie Butadien oder Isopren, mit Hydroxylendgruppen.

Es ist im Rahmen der Erfindung möglich und bevorzugt, Mischungen von verschiedenen Hydroxylgruppen-haltigen Polymeren **A1** oder Aminogruppen-haltigen Polymeren **A2** sowohl untereinander als auch innerhalb der Klassen **A1** und **A2** einzusetzen.

Die mehrfunktionellen Isocyanate **A3** können aliphatisch, gemischt aliphatischaromatisch oder aromatisch sein; bevorzugt werden difunktionelle aliphatische lineare, verzweigt und cyclische Isocyanate wie 1,4-Diisocyanatobutan, 1,6-Diisocyanatohexan, 1,5-Diisocyanato-2-methylpentan, 2,2,4- und 2,4,4-Trimethyl-1,6-diisocyanatohexan, 1,12-Diisocyanatododecan, 1,4-Diisocyanatocyclohexan, Isophorondiisocyanat, Bis-(4-isocyanatocyclohexyl)methan sowie die von diesen abgeleiteten Uretdione, Allophanate und Biurete. In geringem Anteil (bis zu 10 % der Masse der Isocyanat-Komponente) können auch drei- oder mehrfunktionelle Isocyanate wie die von den genannten Diisocyanaten abgeleiteten Isocyanurate eingesetzt werden. Weniger bevorzugt ist der Einsatz von aromatischen oder gemischt aromatisch-aliphatischen Isocyanaten wie Tetramethylxylylendiisocyanat, Bis-(4-isocyanatophenyl)-methan, Toluylendiisocyanat und 1,5-Diisocyanatonaphthalin. Als Verbindungen **A4** mit cyclischen Carbonatgruppen und mindestens einer gegenüber Isocyanat reaktiven Gruppe eignen sich vor allem in 4-Stellung durch einen Hydroxyalkyl- oder Aminoalkylrest substituierten 1,3-Diox(ol)an-2-one. Geeignet sind beispielsweise 4-Hydroxymethyl-1,3-dioxolan-2-on, 4-Aminomethyl-1,3-dioxolan-2-on, 4-(2-Hydroxyäthyl)-1,3-dioxolan-2-on und andere 4-(ω-Aminoalkyl)- oder 4-(ω-Hydroxyalkyl)-1,3-dioxolan-2-one sowie die entsprechenden 1,3-Dioxan-2-one.

Die Säuregruppen der Polymere **A** werden durch Zugabe von Aminen, bevorzugt tertiären Aminen, neutralisiert, das neutralisierte Polymer **A** läßt sich anschließend in Wasser dispergieren, wobei ein Festkörper-Massenanteil von ca. 30 bis ca. 70 %, bevorzugt von ca. 45 bis ca. 65 % eingestellt wird.

Das Amin **B** trägt mindestens zwei primäre Aminogruppen. Es kann darüber hinaus noch sekundäre und tertiäre Aminogruppen enthalten. Geeignete Amine sind aliphatische diprimäre lineare, verzweigte oder cyclische Amine mit 2 bis 40 Kohlenstoffatomen, wie Äthylendiamin, 1,2- und 1,3-Propylendiamin, 1,6-Diaminohexan, Diäthylentriamin, Triäthylentetramin, Tetraäthylenpentamin und höhere Polyiminoalkylenamine.

Die Soft-Feel-Lacke lassen sich aus den Bindemitteln **A** bevorzugt so herstellen, daß Pigmente und gegebenenfalls Mattierungsmittel in der Komponente **A** fein verteilt werden, diese Mischung dann mit dem Amin **B** und gegebenenfalls mit einem Verdicker sowie weiteren üblichen Zusätzen zu einem applikationsfertigen Lack formuliert wird. Besonders bevorzugt lassen sich bei dieser Formulierung Pigmente, Verlaufsmittel, und Antischaummittel gemeinsam mit dem Verdicker zusetzen.

Zur Modifizierung der Oberflächeneigenschaften, insbesondere des sog. Griffs (Haptik)können den erfindungsgemäß hergestellten Lacken auch Wachse zugesetzt werden, wodurch beispielsweise die Kratzfestigkeit der Beschichtung noch erhöht werden kann.

Der Massenanteil an Lösungsmittel im fertigen Lack liegt typisch unter 6, bevorzugt unter 4 %.

Wie bereits eingangs erwähnt, lassen sich mit den durch die Erfindung zugänglichen Lacken Beschichtungen auf harten Substraten aller Art herstellen, die sich oberflächlich weich anfühlen und beispielsweise zu rutschfesten Beschichtungen führen. Insbesondere eignen sich diese Lacke zur Beschichtung von Kunststoffen, Metallen, keramischen Materialien und Glas.

Die Erfindung wird durch die nachfolgenden Beispiele erläutert. Dabei werden zusätzlich die folgenden Definitionen benutzt:

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die Aminzahl ist gemäß DIN 53 176 definiert als der Quotient derjenigen Masse ***m***_{KOH} an Kaliumhydroxid, die genausoviel Säure zur Neutralisation verbraucht wie eine zu untersuchende Probe, und der Masse ***m***_{B} dieser Probe (Masse des Feststoffes in der Probe bei Lösungen oder Dispersionen); ihre übliche Einheit ist "mg/g".

Der Gehalt an Carbonatgruppen wird als spezifische Stoffmenge der Carbonatgruppen angegeben, wobei die Stoffmenge der Carbonatgruppen ***n***(CO₂) auf die Masse des Festharzes ***m*** bezogen wird; die übliche Einheit ist "mmol/g".

Alle Angaben von Zahlen mit der Einheit "%", soweit nicht ausdrücklich anders vermerkt, sind Werte für Massenanteile (g/ 100 g).

### Beispiel 1 Herstellung eines Polyester-Polyols A12

Eine Mischung von 32,2 kg Diäthylenglykol und 16,42 kg Äthylenglykol wurde mit 72 kg Adipinsäure unter Zusatz von 330 g Dibutylzinndilaurat auf 150 °C erhitzt. Das entstehende Wasser wurde durch Zusatz von Xylol ausgekreist, wobei im Verlauf von drei Stunden die Temperatur bis auf 220 °C gesteigert wurde. Die Mischung wurde bei dieser Temperatur gehalten, bis eine Säurezahl von unter 3 mg/g erreicht war. Die Hydroxylzahl des erhaltenen Polyesters betrug ca. 50 mg/g, bei 23 °C und einem Schergefälle von 25 s⁻¹ wurde eine Viskosität von ca. 10 Pa·s gemessen.

### Beispiel 2 Herstellung eines linearen Polyester-Dicarbonats

2064 g des Polyesters aus Beispiel 1 wurden mit 22 g 1,6-Hexandiol, 450 g N-Methylpyrrolidon und 150 g Dimethylolpropionsäure auf ca. 60 °C erhitzt, anschließend wurden 476 g 1,6-Diisocyanatohexan während ca. 30 Minuten zugefügt und diese Temperatur gehalten, bis der Massenanteil an Isocyanat in der Lösung auf ca. 1, 6 % abgefallen war. Danach wurde bei derselben Temperatur 143 g Glycerincarbonat (4-Hydroxymethyl-1,3-dioxolan-2-on) während 10 Minuten zugegeben und ca. 4 Stunden reagieren gelassen, bis die Isocyanatkonzentration auf Null abgesunken war.

Danach wurde durch Zugabe von ca. 66 g Triäthylamin neutralisiert und in ca. 3100 g Wasser dispergiert zu einer feinteiligen Dispersion mit einem Festkörper-Massenanteil von ca. 4 %. Diese Dispersion hatte eine Säurezahl von ca. 24 mg/g und einen Gehalt an Carbonatgruppen von ca. 0,41 mmol/g (jeweils bezogen auf den Feststoff der Dispersion).

### Beispiel 3 Herstellung eines verzweigten Polyester-Dicarbonats

9,8 kg des Polyesters gemäß Beispiel 1 wurden mit 345 g Trimethylolpropan, 25 g Glykol, 109 g 1,6-Hexandiol, 2223 g N-Methylpyrrolidon und 741 g Dimethylolpropionsäure auf 60 °C erhitzt. anschließend wurden 3339 g 1,6-Diisocyanatohexan in ca. 30 Minuten hinzugegeben. bei dieser Temperatur wurde solange gerührt, bis die Isocyanatkonzentration in der Lösung auf einen Massenanteil von ca. 2,4 % gesunken war. Anschließend wurden 1128 g Glycerincarbonat zugefügt; nach einer Reaktionszeit von ca. 4 Stunden bei ca. 60 °C war die Isocyanatkonzentration auf Null gesunken.

Zur Neutralisation wurden 290 g Dimethyläthanolamin zugefügt; anschließend wurde in 16,4 kg Wasser zu einer feinteiligen Dispersion mit einen Festkörper-Massenanteil von ca. 45 % dispergiert. Die Dispersion wies eine Säurezahl von ca. 21 mg/g und einen Gehalt an Carbonatgruppen von ca. 0,62 mmol/g auf.

### Beispiel 4 Herstellung eines kationischen Polyester-Dicarbonats

3,5 kg des Polyesters aus Beispiel 1 wurden mit 38 g 1,6-Hexandiol und 228 g N-Methyldiäthanolamin auf ca. 60 °C erwärmt; bei dieser Temperatur wurden dann innerhalb von 15 Minuten 813 g 1,6-Diisocyanatohexan zugefügt. Nach einer 30-minütigen Nachreaktion bei dieser Temperatur wurden 244 g Glycerincarbonat hinzugegeben. Die Mischung wurde solange bei 60 °C gerührt, bis die Isocyanatkonzentration auf Null gesunken war. Danach wurde mit 460 g 10%iger Ameisensäure neutralisiert, mit 7,3 kg Wasser wurde dann eine feinteilige Dispersion mit einem Festkörper-Massenanteil von ca. 40 % hergestellt. Die Dispersion hatte eine Säurezahl von ca. 20 mg/g und eine Aminzahl von ca. 22 mg/g. Der Gehalt an Carbonatgruppen betrug ca. 0,62 mmol/g.

Die Härtung von Lacken, die die Polyester-Dicarbonate gemäß den Beispielen 2 bis 4 enthalten, erfolgt durch Zugabe einer stöchiometrischen Menge an primären Aminen.

### Beispiel 5 Soft-Feel-Lack

Zu 164 g des Polyester-Dicarbonats aus Beispiel 2 wurden 1,5 g Diäthylentriamin zugesetzt. Der erhaltene Klarlack wurde auf eine Glasplatte aufgerakelt und bei 120 °C ca. 30 min getrocknet. Man erhielt einen elastischen, klebfreien und klaren Lackfilm. Die Oberfläche des gehärteten Lackes fühlt sich weich an.

### Beispiel 6 Soft-Feel-Lack

34,4 g des Polyester-Dicarbonats aus Beispiel 3 wurden mit 0,5 g eines handelsüblichen Netzmittels (®Additol XL 250 der Vianova Resins) und 0,8 g eins handelsüblichen Dispergiermittels (®Additol VXW 6208 der Vianova Resins) sowie 1,5 g eines Rußpigments (Spezialschwarz 4 der Degussa AG) versetzt und in einer Perlmühle homogenisiert. Als Härter wurde eine Lösung von 4,9 g Diäthylentriamin in 30 g Wasser eingesetzt. Der Schwarzlack mit dem Härter und ein zusätzlicher Entschäumer (®Additol XW 375) wurden ca. 20 Minuten auf einem schnellaufenden Mischer (Dissolver) homogenisiert.

Die Chemikalienbeständigkeit wurde an den beschichteten Stahlplatten beurteilt. Bei 1000 Doppelhüben mit einem sog. Crockmeter wurden im Kontakt mit Wasser, Xylol, Aceton und verdünntem Ammoniak kein bzw. geringer (Xylol) Angriff festgestellt.

### Beispiel 7 Mischung eines Polyester-Polyols mit einem Polybutadien-Polyol

10,52 kg des Polyesters aus Beispiel 1 wurden mit 10,3 kg eines Polymerisats von Butadien mit Hydroxylendgruppen (®Poly-bd R 45 HT der Fa. Elf Atochem) vermischt.

### Beispiel 8 Herstellung eines anionischen linearen Polyesterurethans

11,9 kg der Mischung aus Beispiel 7 wurden mit 130 g 1,6-Hexandiol, 2,6 kg N-Methylpyrrolidon und 0,87 kg Dimethylolpropionsäure auf 60 °C erhitzt, anschließend wurden 2,75 kg 1,6-Diisocyanatohexan in ca. 25 Minuten zugefügt und bei dieser Temperatur solange gehalten, bis die Konzentration an Isocyanatgruppen in der Lösung ca. 1,6 % betrug. Sodann wurden innerhalb von ca. 10 Minuten 830 g Glycerincarbonat zugegeben und 4 Stunden bei ca. 60 °C gehalten; danach war die Isocyanat-Konzentration auf Null gesunken. Mit 0,38 kg Triäthylamin wurde neutralisiert; anschließend wurde in 18 kg Wasser zu einer feinteiligen Dispersion mit einem Festkörper-Massenanteil von ca. 45 % dispergiert. Diese Dispersion hatte eine Säurezahl von ca. 25 mg/g und einen Gehalt an Carbonatgruppen von. ca. 0,41 mmol/g.

### Beispiel 9 Mischung eines Polyesters mit α, ω - Polybutylmethacrylat-Diol

4,63 kg des Polyesters aus Beispiel 1 wurden mit 4,23 kg eines Polybutylmethacrylat-Diols (Versuchsprodukt BD 2000 der Fa. Th. Goldschmidt AG) gelöst in N-Methylpyrrolidon (Festkörper-Massenanteil 27,3 %, Hydroxylzahl ca. 84 mg/g) zugegeben.

### Beispiel 10 verzweigter anionischer Polyester

Zu 323 g der Mischung aus Beispiel 9 wurden 4 g 1,6-Hexandiol, 13 g Trimethylolpropan, 1 g Äthylenglykol, 38 g N-Methylpyrrolidon und 27 g Dimethylolpropionsäure gegeben, die Mischung wurde auf 60 °C erwärmt. Anschließend wurden 122 g 1,6-Diisocyanatohexan zugefügt; es wurde bei 60 °C gehalten, bis die Isocyanat-Konzentration konstant bei 2,8 % (bezogen auf die masse der Lösung) lag. Bei konstanter Temperatur wurden 41 g Glycerincarbonat zugegeben und 4 Stunden bei dieser Temperatur gehalten, bis die Isocyanatkonzentration auf Null gesunken war.

Zur Neutralisation wurden 11 g Dimethyläthanolamin zugegeben, die Mischung wurde anschließend in 0,5 kg Wasser zu einer feinteiligen Dispersion mit einem Festkörper-Massenanteil von ca. 45 % dispergiert. Die Säurezahl betrug ca. 24 mg/g, und der Carbonatgruppengehalt ca. 0,71 mmol/g.

### Beispiel 11 Soft-Feel-Lacke

Mit den Polymer-Dispersionen der Beispiele 7 bis 10 wurden durch Zugabe von Triäthylentetramin Klarlacke gemäß der Verfahrensweise des Beispiels 6 hergestellt und auf Stahlplatten aufgetragen. Nach dem Trocknen ergab sich in allen Fällen eine elastische klebfreie Lackschicht, die keine Nachhärtung zeigte. Die Chemikalienbeständigkeit war durchweg gut.

## Patentansprüche

1. Wäßrige Bindemittel für "Soft-Feel"-Lacke, enthaltend vorwiegend aliphatische, wasserlösliche oder wasserdispergierbare Polymere **A** mit terminalen oder lateralen cyclischen Carbonatgruppen und ein Amin **B** mit mindestens zwei primären Aminogruppen, **dadurch gekennzeichnet, daß** das Polymer **A** eine Glas-Übergangs-Temperatur von -30 °C bis -70 °C aufweist, daß als Amin **B** ein aliphatisches lineares verzweigtes oder cyclisches Amin mit 2 bis 40 Kohlenstoffatomen eingesetzt wird, und daß das Verhältnis der Anzahl der primären Aminogruppen in der Komponente **B** zur Anzahl der cyclischen Carbonatgruppen in der Komponente **A** 7:3 bis 3:7 beträgt.

2. Wäßrige Bindemittel für "Soft-Feel"-Lacke nach Anspruch 1, **dadurch gekennzeichnet, daß** die Polymeren **A** im Durchschnitt mindestens 1,5 terminale oder laterale cyclische Carbonatgruppen pro Molekül aufweisen.

3. Wäßrige Bindemittel für "Soft-Feel"-Lacke nach Anspruch 1, **dadurch gekennzeichnet, daß** die Polymeren **A** erhältlich sind durch Umsetzung von Verbindungen **A4**, die eine cyclische Carbonatgruppe und eine gegenüber Isocyanaten reaktive Gruppe enthalten, mit dem Umsetzungsprodukt aus einem mehrfunktionellen Isocyanat **A3** mit mindestens zwei Isocyanatgruppen und einem vorwiegend aliphatischen Polymeren ausgewählt aus Hydroxylgruppen-haltigen Polymeren **A1** und Aminogruppen-haltigen Polymeren **A2**, wobei das Isocyanat **A3** in einer solchen Menge eingesetzt wird, daß das Umsetzungsprodukt im Durchschnitt mindestens 1,5 Isocyanatgruppen enthält.

4. Wäßrige Bindemittel für "Soft-Feel"-Lacke nach Anspruch 1, **dadurch gekennzeichnet, daß** die Polymeren **A** solche Polymere **A5** enthalten, die Umsetzungsprodukte sind von Verbindungen mit mindestens zwei cyclischen Carbonatgruppen **A51** und Diaminen **A52**, wobei die Diamine im Unterschuß eingesetzt werden..

5. Wäßrige Bindemittel für "Soft-Feel"-Lacke nach Anspruch 3, **dadurch gekennzeichnet, daß** die Hydroxylgruppen-haltigen Polymeren **A1** ausgewählt sind aus Polyacrylat-Polyolen **A11**, Polyester-Polyolen **A12**, Polyurethan-Polyolen **A14** und Polyolefin-Polyolen **A15**.

6. Wäßrige Bindemittel für "Soft-Feel"-Lacke nach Anspruch 3, **dadurch gekennzeichnet, daß** die Aminogruppen-haltigen Polymeren ausgewählt sind aus Polyamidoaminen **A23** und Polyharnstoffen **A24**.

7. Wäßrige Bindemittel für "Soft-Feel"-Lacke nach Anspruch 1, **dadurch gekennzeichnet, daß** die Polymeren **A** eine Säurezahl von 5 bis 200 mg/g und einen spezifischen Gehalt an cyclischen Carbonatgruppen von 0,2 bis 1,5 mmol/g aufweisen.

8. Wäßrige Bindemittel für "Soft-Feel"-Lacke nach Anspruch 1, **dadurch gekennzeichnet, daß** als Amine **B** primäre aliphatische lineare Diamine mit 2 bis 40 Kohlenstoffatomen eingesetzt werden, ausgewählt aus Äthylendiamin, Diäthylentriamin, Triäthylentetramin und Tetraäthylenpentamin.

9. Verwendung von Bindemitteln nach Anspruch 1 in Soft-Feel-Lacken zur Herstellung von Beschichtungen auf harten Substraten ausgewählt aus Kunststoffen, Metallen, Keramik und Glas.

10. Beschichtungen mit "Soft-Feel"-Charakteristik, herstellbar durch Auftragen eines Lackes enthaltend ein Bindemittel nach Anspruch 1.

## Claims

1. An aqueous binder for soft feel coating materials, comprising predominantly aliphatic, water-soluble or water-dispersible polymers **A** having terminal or lateral cyclic carbonate groups and an amine **B** having at least two primary amino groups, wherein the polymer **A** has a glass transition temperature of from -30°C to -70°C, wherein the amine **B** used is an aliphatic linear, branched or cyclic amine having 2 to 40 carbon atoms, and wherein the ratio of the number of primary amino groups in the component **B** to the number of cyclic carbonate groups in the component **A** is from 7:3 to 3:7.

2. An aqueous binder for soft feel coating materials, as claimed in claim 1, wherein the polymers **A** have on average at least 1.5 terminal or lateral cyclic carbonate groups per molecule.

3. An aqueous binder for soft feel coating materials, as claimed in claim 1, wherein the polymers **A** are obtainable by reacting compounds **A4** which contain a cyclic carbonate group and an isocyanate-reactive group with the reaction product of a polyfunctional isocyanate **A3** having at least two isocyanate groups and a predominantly aliphatic polymer selected from hydroxyl-containing polymers **A1** and amino-containing polymers **A2,** said isocyanate **A3** being used in an amount such that the reaction product contains on average at least 1.5 isocyanate groups.

4. An aqueous binder for soft feel coating materials, as claimed in claim 1, wherein the polymers **A** comprise polymers **A5** which are reaction products of compounds having at least two cyclic carbonate groups **A51** and diamines **A52,** the diamines being used in a substoichiometric amount.

5. An aqueous binder for soft feel coating materials, as claimed in claim 3, wherein the hydroxyl-containing polymers **A1** are selected from polyacrylate polyols **A11,** polyester polyols **A12,** polyurethane polyols **A14,** and polyolefin polyols **A15.**

6. An aqueous binder for soft feel coating materials, as claimed in claim 3, wherein the amino-containing polymers are selected from polyamido amines **A23** and polyureas **A24**.

7. An aqueous binder for soft feel coating materials, as claimed in claim 1, wherein the polymers **A** have an acid number of from 5 to 200 mg/g and a specific cyclic carbonate group content of from 0.2 to 1.5 mmol/g.

8. An aqueous binder for soft feel coating materials, as claimed in claim 1, wherein said amines **B** are primary aliphatic linear diamines having 2 to 40 carbon atoms, selected from ethylenediamine, diethylenetriamine, triethylenetetramine, and tetraethylenepentamine.

9. The use of a binder as claimed in claim 1 in soft feel coating materials for producing a coating on hard substrates selected from plastics, metals, ceramic, and glass.

10. A coating having soft feel characteristics, producible by applying a coating material comprising a binder as claimed in claim 1.

## Revendications

1. Liants aqueux pour peintures "Soft-Feel" (à toucher doux), contenant de préférence des polymères A aliphatiques, solubles ou dispersibles dans l'eau, comportant des groupes carbonate cycliques terminaux ou latéraux, et une amine B comportant au moins deux groupes amino primaires, **caractérisés en ce que** le polymère A présente une température de transition vitreuse de -30 à -70°C, que l'on utilise en tant qu'amine B une amine aliphatique cyclique ou à chaîne linéaire ou ramifiée ayant 2 à 40 atomes de carbone, et que le rapport du nombre des groupes amino primaires du composant B au nombre des groupes carbonate cycliques du composant A est de 7:3 à 3:7.

2. Liants aqueux pour peintures "Soft-Feel" selon la revendication 1, **caractérisés en ce que** les polymères A comportent en moyenne au moins 1,5 groupes carbonate cycliques, terminaux ou latéraux, par molécule.

3. Liants aqueux pour peintures "Soft-Feel" selon la revendication 1, **caractérisés en ce que** les polymères A peuvent être obtenus par réaction de composés A4, qui contiennent un groupe carbonate cyclique et un groupe réactif vis-à-vis des isocyanates, avec le produit de la réaction d'un isocyanate multifonctionnel A3 avec au moins deux groupes isocyanate et un polymère essentiellement aliphatique choisi parmi les polymères A1 contenant des groupes hydroxyle et les polymères A2 contenant des groupes amino, l'isocyanate A3 étant utilisé en une quantité telle que le produit de réaction contienne en moyenne au moins 1,5 groupes isocyanate.

4. Liants aqueux pour peintures "Soft-Feel" selon la revendication 1, **caractérisés en ce que** les polymères A contiennent des polymères A5 qui sont des produits de la réaction de composés ayant au moins deux groupes carbonate cycliques A51 et des diamines A52, les diamines étant utilisées en des quantités inférieures aux quantités stoechiométriques.

5. Liants aqueux pour peintures "Soft-Feel" selon la revendication 3, **caractérisés en ce que** les polymères A1 contenant des groupes hydroxyle sont choisis parmi les polyacrylate-polyols A11, les polyester-polyols A12, les polyuréthanne-polyols A14 et les polyoléfine-polyols A15.

6. Liants aqueux pour peintures "Soft-Feel" selon la revendication 3, **caractérisés en ce que** les polymères contenant des groupes amino sont choisis parmi les polyamidoamines A23 et les polyurées A24.

7. Liants aqueux pour peintures "Soft-Feel" selon la revendication 1, **caractérisés en ce que** les polymères A ont un indice d'acide de 5 à 200 mg/g et une teneur spécifique en groupes carbonate cycliques de 0,2 à 1,5 mmoles/g.

8. Liants aqueux pour peintures "Soft-Feel" selon la revendication 1, **caractérisés en ce qu'**on utilise en tant qu'amine B des diamines linéaires aliphatiques primaires ayant 2 à 40 atomes de carbone, qui sont choisies parmi l'éthylènediamine, la diéthylènetriamine, la triéthylènetétramine et la tétraéthylènepentamine.

9. Utilisation de liants selon la revendication 1 dans des peintures "Soft-Feel", pour préparer des revêtements sur des substrats durs, choisis parmi les plastiques, les métaux, la céramique et le verre.

10. Revêtements ayant des caractéristiques "Soft-Feel", pouvant être préparés par application d'une peinture contenant un liant selon la revendication 1.
